# EUROPEAN PATENT APPLICATION

(11) **EP 4 640 649 A1**
(43) Date of publication of application: **29.10.2025**
(21) Application number: 23907044.4
(22) Date of filing: 19.12.2023
(51) Int. Cl.: C03C 27/12, C08K 5/098, C08L 101/00

(54) **INTERLAYER FILM FOR LAMINATED GLASSES AND LAMINATED GLASS**

(30) Priority: 20.12.2022 JP 2022203703
(71) Applicant: SEKISUI CHEMICAL CO., LTD., Osaka-shi Osaka 530-8565 (JP)
(72) Inventor: OKAJIMA, Moyuru, Koka-shi, Shiga 528-8585 (JP); TAKAI, Minako, Koka-shi, Shiga 528-8585 (JP); SUZUKI, Yuuki, Koka-shi, Shiga 528-8585 (JP)
(74) Representative: Ter Meer Steinmeister & Partner
(86) International application number: PCT/JP2023/045505
(87) International publication number: WO 2024/135684

(57) **Abstract**

An interlayer film for laminated glass of the present invention contains a colorant and has a pummel value at a water content of 0.4% of 1 or more and 7 or less and a pummel value at a water content of 1.5% of 3 or more and 9 or less. The laminated glass of the present invention includes a first laminated glass member, a second laminated glass member, and the interlayer film for laminated glass interposed between the first laminated glass member and the second laminated glass member. According to the present invention, the interlayer film for laminated glass which is capable of preventing, even when it contains a colorant and its water content increases, the occurrence of its separation from a laminated glass member due to a decrease in its adhesive force, and a laminated glass including such an interlayer film for laminated glass can be provided.

## Description

### Technical Field

The present invention relates to an interlayer film for laminated glass and a laminated glass including the interlayer film for laminated glass.

### Background Art

Laminated glass is safe because even when it is broken by an external impact, glass fragments are less likely to scatter. For this reason, laminated glass is widely used as window glass for various vehicles such as cars and for buildings and others. A widely-known laminated glass is one obtained by integrating a pair of glass plates with an interlayer film for laminated glass interposed between them and containing a resin component such as a polyvinyl acetal resin.

When the adhesive force between a glass plate and an interlayer film of a laminated glass is weak, the glass plate broken by impact is separated from the interlayer film so that glass fragments scatter. When the adhesive force is strong, the glass plate and the interlayer film are broken at the same time so that penetration occurs. Therefore, it is known that the adhesive force needs to be adjusted to fall within an appropriate range in order to prevent separation between the glass plate and the interlayer film and the occurrence of penetration when the laminated glass is subjected to impact (see, for example, PTL1).

It should be noted that the adhesive force of a laminated glass is generally evaluated by a pummel value, and resistance to penetration (i.e., penetration resistance) is generally evaluated by a falling ball test. In the falling ball test, a steel ball is dropped from a predetermined height to evaluate penetration resistance on the basis of whether or not the steel ball penetrates a laminated glass.

### Citation List

### Patent Literature

PTL1: WO2020/145322

### Summary of Invention

### Technical Problem

When a laminated glass is used for a long period of time, the water content of an interlayer film for laminated glass may increase. However, when the interlayer film for laminated glass contains a colorant, there is a problem that when its water content increases, a pummel value is likely to decrease and the adhesive force of the interlayer film for laminated glass decreases. When the adhesive force of the interlayer film for laminated glass decreases, separation between a laminated glass member and the interlayer film may occur.

It is therefore an object of the present invention to provide an interlayer film for laminated glass which is capable of preventing, even when it contains a colorant and its water content increases, the occurrence of its separation from a laminated glass member due to a decrease in its adhesive force, and a laminated glass including such an interlayer film for laminated glass.

### Solution to Problem

The present inventors have intensively studied and, as a result, have found that the above object can be achieved by adjusting the composition of an interlayer film for laminated glass in such a manner that a pummel value at a water content of 0.4% and a pummel value at a water content of 1.5% fall within their respective predetermined ranges. This finding has led to the completion of the present invention described below.
[1] An interlayer film for laminated glass, which contains a colorant and has a pummel value at a water content of 0.4% of 1 or more and 7 or less and a pummel value at a water content of 1.5% of 3 or more and 9 or less.
[2] The interlayer film for laminated glass according to the above [1] or [2], wherein a value obtained by subtracting the pummel value at a water content of 0.4% from the pummel value at a water content of 1.5% is 0 or more.
[3] The interlayer film for laminated glass according to the above [1] or [2], which contains a thermoplastic resin.
[4] The interlayer film for laminated glass according to any one of the above [1] to [3], which further contains a dispersant.
[5] The interlayer film for laminated glass according to the above [4], wherein the dispersant contains at least one selected from the group consisting of an acrylic dispersant, an amine-based dispersant, a urethane-based dispersant, and a carboxylic acid-based dispersant.
[6] The interlayer film for laminated glass according to the above [4] or [5], wherein the dispersant contains two or more dispersants.
[7] The interlayer film for laminated glass according to the above [6], wherein the dispersant contains a first dispersant and a second dispersant having a lower molecular weight than the first dispersant, and wherein a mass-based ratio of a content of the second dispersant to a content of the first dispersant is 1/100 or more and 30/100 or less.
[8] The interlayer film for laminated glass according to any one of the above [4] to [7], wherein the dispersant contains a dispersant having a molecular weight of 2500 or more.
[9] The interlayer film for laminated glass according to any one of the above [4] to [8], wherein a content of the dispersant in the interlayer film for laminated glass is 0.001 mass% or more and 0.1 mass% or less.
[10] The interlayer film for laminated glass according to any one of the above [4] to [9], wherein a ratio of a content of the dispersant to a content of the colorant (dispersant content/colorant content) is 0.01 or more and 1.0 or less.
[11] The interlayer film for laminated glass according to any one of the above [1] to [10], which contains at least one metallic salt selected from the group consisting of an alkali metal salt, an alkaline-earth metal salt, and a magnesium salt.
[12] A laminated glass including a first laminated glass member, a second laminated glass member, and the interlayer film for laminated glass according to any one of the above [1] to [11] interposed between the first laminated glass member and the second laminated glass member.

### Advantageous Effects of Invention

The present invention makes it possible to provide an interlayer film for laminated glass which is capable of preventing, even when it contains a colorant and its water content increases, the occurrence of its separation from a laminated glass member due to a decrease in its adhesive force, and a laminated glass including such an interlayer film for laminated glass.

### Description of Embodiments

Hereinbelow, the present invention will be described in more detail.

### [Pummel value]

An interlayer film for laminated glass of the present invention (hereinafter sometimes simply referred to as "interlayer film") contains a colorant and has a pummel value at a water content of 0.4% of 1 or more and 7 or less and a pummel value at a water content of 1.5% of 3 or more and 9 or less.

The interlayer film of the present invention has such a configuration, and is therefore capable of preventing, even when it contains a colorant and its water content increases, the occurrence of its separation from a laminated glass member due to a decrease in its adhesive force.

If the pummel value at a water content of 0.4% of the interlayer film does not fall within the above range, the penetration resistance of the interlayer film is likely to decrease or separation between a laminated glass member and the interlayer film is likely to occur when the water content is low or increases. From such a viewpoint, the pummel value at a water content of 0.4% of the interlayer film is preferably 1.5 or more and 6.5 or less, more preferably 2 or more and 6 or less, even more preferably 3 or more and 6 or less.

If the pummel value at a water content of 1.5% of the interlayer film does not fall within the above range, the penetration resistance of the interlayer film is likely to decrease or separation between a laminated glass member and the interlayer film is likely to occur when the water content increases. From such a viewpoint, the pummel value at a water content of 1.5% of the interlayer film is preferably 5 or more and 9 or less, more preferably 7 or more and 9 or less.

The pummel value of the interlayer film can be adjusted to fall within the above predetermined range by adjusting the composition of the interlayer film. More specifically, the pummel value is likely to be adjusted to fall within a predetermined range by, for example, adding a dispersant to the interlayer film and appropriately selecting the type and content of the dispersant. The pummel value is a value obtained by measuring a laminated glass using the interlayer film. Specifically, the pummel value may be measured by producing a laminated glass using the interlayer film by a method described in Examples and adjusting the water content of the interlayer film to 0.4% or 1.5%. The pummel value of the interlayer film can be measured by a method that will be described later in Examples.

A value obtained by subtracting the pummel value at a water content of 0.4% of the interlayer film from the pummel value at a water content of 1.5% of the interlayer film is preferably 0 or more. When a value obtained by subtracting the pummel value at a water content of 0.4% of the interlayer film from the pummel value at a water content of 1.5% of the interlayer film is 0 or more, it is possible to prevent a decrease in pummel value due to an increase in the water content of the interlayer film, thereby preventing the occurrence of separation between the interlayer film and a laminated glass member. From such a viewpoint, a value obtained by subtracting the pummel value at a water content of 0.4% of the interlayer film from the pummel value at a water content of 1.5% of the interlayer film is more preferably 3 or more, even more preferably 4 or more. The upper limit of range of a value obtained by subtracting the pummel value at a water content of 0.4% of the interlayer film from the pummel value at a water content of 1.5% of the interlayer film is not limited, but is usually 8, preferably 7, more preferably 6. When the range of a value obtained by subtracting the pummel value at a water content of 0.4% of the interlayer film from the pummel value at a water content of 1.5% of the interlayer film is equal to or less than the above upper limit, penetration resistance is likely to be maintained even when the water content increases.

### [Colorant]

As described above, the interlayer film of the present invention contains a colorant. The colorant to be used is not limited, and any coloring matter conventionally added to interlayer films for laminated glass can be used, such as blue, yellow, red, green, purple, black, or white coloring matter. The coloring matter may be a pigment or a dye. When a colorant is used for the interlayer film, a laminated glass can be colored and the aesthetic quality of the interlayer film can be enhanced. In the present invention, the colorant is preferably a pigment. When a pigment is used in the present invention, the colorant can more effectively be dispersed in the interlayer film by a dispersant that will be described layer. Further, when the interlayer film contains a pigment, a pummel value tends to increase when its water content increases.

Examples of the pigment include a copper phthalocyanine-based pigment such as pigment blue, a phthalocyanine-based pigment such as a cobalt phthalocyanine pigment, an azo-based pigment such as a nickel complex azo-based pigment, an anthraquinone-based pigment, a perylene-based pigment, diketopyrrolopyrrole-based pigment, a quinacridone-based pigment, a perinone-based pigment, a thioindigo-based pigment, an isoindoline-based pigment, an isoindolinone-based pigment, a quinophthalone-based pigment, a threne-based pigment, a titanium oxide-based pigment, and a carbon-based material such as carbon black such as pigment black 7, graphene, or carbon nanotubes.

Examples of the dye include an azo dye, a cyanine dye, a triphenylmethane dye, a phthalocyanine dye, an anthraquinone dye, a naphthoquinone dye, a quinonimine dye, a methine dye, an azomethine dye, a squarylium dye, an acridine dye, a styryl dye, a coumarin dye, a quinoline dye, and a nitro dye. The dye may be a dispersive dye.

Among the above colorants, preferred are carbon black, an azo-based pigment, a phthalocyanine-based pigment, a perylene-based pigment, and a quinacridone-based pigment.

As the colorant, one colorant may be used singly or two or more colorants may be used in combination.

The pigment or the dye constituting the colorant may directly be added to a resin for forming a resin layer, but may be converted to ink, toner, or the like before added to the resin. In such a case, the content of the colorant means the content of the pigment or the dye itself (i.e., an active ingredient content).

Further, the colorant is preferably dispersed in a plasticizer before being added to the resin. More specifically, the colorant may be mixed with the resin as a dispersion liquid obtained by adding the colorant to a plasticizer and further adding a dispersant thereto to disperse the colorant in the plasticizer.

The content of the colorant in the interlayer film is preferably 0.001 mass% or more and 1.0 mass% or less. When the content of the colorant is equal to or more than the above lower limit, the interlayer film can appropriately be colored to enhance the aesthetic quality of the interlayer film. Further, when the content of the colorant is equal to or less than the above upper limit, the interlayer film can appropriately be colored while maintaining its transparency and mechanical characteristics. The content of the colorant in the interlayer film is more preferably 0.003 mass% or more and 0.5 mass% or less, even more preferably 0.01 mass% or more and 0.3 mass% or less, still even more preferably 0.01 mass% or more and 0.2 mass% or less, particularly preferably 0.01 mass% or more and 0.1 mass% or less.

### (Dispersant)

The interlayer film of the present invention preferably contains a dispersant. When the interlayer film contains a dispersant, a colorant, especially a pigment is likely to be appropriately dispersed in the interlayer film. This makes it possible to, even when the interlayer film contains a colorant, prevent an increase in haze value.

Examples of the dispersant usable in the present invention include an acrylic dispersant, an amine-based dispersant, a urethane-based dispersant, a carboxylic acid-based dispersant, a polyester-based dispersant, a phosphoric acid ester-based dispersant, and a polyether-based dispersant. Among them, an acrylic dispersant, an amine-based dispersant, a urethane-based dispersant, and a carboxylic acid-based dispersant are preferred. These dispersants may be used singly or in combination of two or more of them.

In the present invention, among the above dispersants, at least one selected from the group consisting of an acrylic dispersant, an amine-based dispersant, and a urethane-based dispersant is more preferably used. When the interlayer film contains these dispersants, a colorant is likely to be dispersed in the interlayer film so that a low haze value is likely to be achieved.

The dispersant may have a polar group such as an amino group, a carboxyl group, a sulfone group, a hydroxyl group, a phosphoric group, a group derived from a nitrogen-containing heterocycle such as pyridine, pyrimidine, or pyrazine, a salt of each of them, or a quaternary ammonium salt. The polar group is preferably an amino group.

Further, the dispersant may be acidic, basic, or nonionic, but is preferably an acidic dispersant or a basic dispersant. Further, the dispersant is preferably a solvent-based or solvent-free dispersant.

The dispersant is preferably a polymer-based dispersant. Specifically, the polymer-based dispersant is a dispersant having a molecular weight of, for example, 1500 or more, preferably 2500 or more, more preferably 2800 or more, even more preferably 3000 or more. When a dispersant having a molecular weight of 1500 or more is used, a colorant such as a pigment is likely to be appropriately dispersed in a thermoplastic resin. The upper limit of molecular weight of the dispersant is not limited but may be, for example, 100,000 or less.

It should be noted that the molecular weight herein means a weight-average molecular weight and specifically means one measured by gel permeation chromatography (GPC).

The acrylic dispersant is a dispersant having a structural unit derived from an acrylic monomer such as (meth)acrylic acid or a (meth)acrylic acid ester. The acrylic dispersant may be a polymer-based dispersant as described above, that is, an acrylic polymer, and is preferably an acrylic block copolymer. Further, the acrylic dispersant preferably has a polar group and preferably becomes an acidic or basic dispersant by having a polar group.

The urethane-based dispersant may be a dispersant having a polyurethane structure with a plurality of urethane bonds. The urethane-based dispersant is preferably a polymer-based dispersant, preferably has a polar group, and preferably becomes an acidic or basic dispersant by having a polar group.

Examples of the amine-based dispersant include compounds each having, in its molecular structure, an amino group as a polar group as described above. Therefore, the above-described acrylic dispersant, urethane-based dispersant, and the like may be amine-based dispersants. Further, the amine-based dispersant may have a polyamine structure in its molecule. For example, the amine-based dispersant may be an alkenyl succinic acid imide-based dispersant obtained by further reacting an alkenyl succinic anhydride with a polyamine.

Examples of the carboxylic acid-based dispersant include a carboxylic acid, a polycarboxylic acid, and salts thereof. Specifically, stearic acid, oleic acid, and a polycarboxylic acid salt of polyaminoamide are preferred. The carboxylic acid-based dispersant is preferably used in combination with at least any one of the above-described acrylic dispersant, amine-based dispersant, and urethane-based dispersant. When the carboxylic acid-based dispersant is used in combination with these dispersants, a colorant is likely to be more appropriately dispersed in the interlayer film. Further, even when a dispersion liquid containing a colorant and such dispersants used for producing the interlayer film is stored for a long period of time, the occurrence of aggregation is likely to be prevented.

The interlayer film of the present invention may contain two or more dispersants. Specifically, the interlayer film may contain at least a first dispersant and a second dispersant different from the first dispersant. However, the interlayer film may not contain the second dispersant, that is, may contain only the first dispersant as a dispersant.

When the interlayer film of the present invention uses two or more dispersants, a colorant is likely to be dispersed and the occurrence of aggregation is likely to be prevented even during long-term storage.

The first dispersant preferably has a larger molecular weight than the second dispersant. When the interlayer film contains two or more dispersants different in molecular weight from each other, a colorant is more likely to be dispersed by the dispersants. Further, even when a dispersion liquid containing a colorant and such dispersants is stored for a long period of time, the occurrence of aggregation is likely to be prevented.

The molecular weight of the first dispersant is preferably 2000 or more and 100,000 or less, more preferably 2500 or more and 50000 or less, even more preferably 2800 or more and 15000 or less, still even more preferably 3000 or more and 15000 or less. The molecular weight of the second dispersant is preferably 1500 or more and 20000 or less, more preferably 2000 or more and 8000 or less, even more preferably 2000 or more and less than 4500.

When the interlayer film contains two or more dispersants, the first dispersant is preferably any one of an acrylic dispersant, an amine-based dispersant, and a urethane-based dispersant, and the second dispersant is preferably a carboxylic acid-based dispersant. When at least such two dispersants having a specific structure are used, a colorant is likely to be dispersed in the interlayer film. Further, even when a dispersion liquid containing a colorant and such dispersants is stored for a long period of time, the occurrence of aggregation is likely to be prevented.

It should be noted that it is preferred that in the interlayer film, the first dispersant has the highest molecular weight and the second dispersant has the lowest molecular weight among all the dispersants contained in the interlayer film. The dispersant contained in the interlayer film may contain a first dispersant and a second dispersant.

When the interlayer film contains a second dispersant in addition to a first dispersant, the content of the first dispersant in the interlayer film is preferably larger than the content of the second dispersant in the interlayer film. When the content of the first dispersant is larger than the content of the second dispersant, a colorant is likely to be appropriately dispersed in the interlayer film.

A mass-based ratio of the content of the second dispersant to the content of the first dispersant(second dispersant/first dispersant) in the interlayer film is specifically preferably 1/100 or more and 30/100 or less. When the interlayer film contains the first dispersant and the second dispersant in such a content ratio, a colorant is likely to be appropriately dispersed in the interlayer film. Further, even when a dispersion liquid containing a colorant and such dispersants is stored for a long period of time, the occurrence of aggregation is likely to be prevented.

The ratio (second dispersant/first dispersant) is more preferably 3/100 or more and 25/100 or less, even more preferably 7/100 or more and 20/100 or less, still even more preferably 10/100 or more and 20/100 or less.

The dispersant may be a commercially-available product. Preferred examples of a commercially-available urethan-based or acrylic dispersant include "DISPERBYK-102", "DISPERBYK-185", "DISPERBYK-190", "DISPERBYK-193", "DISPERBYK-199", "DISPERBYK-2009", "DISPER BYK-160" "DISPERBYK-2001", "DISPERBYK-2000", "DISPERBYK-21116", "DISPERBYK-110", "DISPERBYK-111", and "DISPERBYK-180" manufactured by BYK.

Other examples include "EFKA-44", "EFKA-46", "EFKA-47", "EFKA-48", "EFKA-4050", "EFKA-4020", "EFKA-4060", "EFKA-4406", "EFKA-4800", and "EFKA-1101" manufactured by BASF. Other examples include "NBZ-4204/10" manufactured by Lubrizol, "Hinoact KF-1M", "Hinoact T-6000", "Hinoact T-7000", "Hinoact T-8000", "Hinoact T-8350P", "Hinoact T-8000E", "KF-1000", "AJISPERPB-821", "AJISPERPB-822", "AJISPERPB-823", and "AJISPERPA-111" manufactured by Kawaken Fine Chemicals Co., Ltd, "FLOWLEN DOPA-33BHF" and "FLOWLEN DOPA-44BHF" manufactured by Kyoeisha Chemical Co., Ltd, and "Solsperse 20000", "Solsperse 22000", "Solsperse 24000", "Solsperse 27000", "Solsperse 28000", "Solsperse 41000", "Solsperse 41090", "Solsperse 43000", "Solsperse 44000", "Solsperse 46000", "Solsperse 5000", and "Solsperse 2200" manufactured by Avecia. Other examples include "DISPARLON DA-234", "DISPARLON DA-325", "DISPARLON DA-375", and "DISPARLON DA-725" manufactured by Kusumoto Chemicals, Ltd., and "TEGODispers670", "TEGODispers740W", "TEGODispers750W", "TEGODispers755W", "TEGODisperse757W", and "TEGODispers760" manufactured by Evonik. Other examples include "OLOA-1200" manufactured by Chevron, "S-900" manufactured by Nidwin Cooper, USA, and "NEWPOL PE61", "NEWPOL PE64", "NEWPOL PE74", and "NEWPOL PE75" manufactured by Sanyo Chemical Industries, Ltd. These dispersants mentioned above as examples are preferably used as a first dispersant.

Examples of a commercially-available carboxylic acid-based dispersant include "ANTI-TERRA-U", "ANTI-TERRA-U100", "ANTI-TERRA-203", "ANTI-TERRA-204", and "ANTI-TERRA-205" manufactured by BYK. As described above, a carboxylic acid-based dispersant is preferably used as a second dispersant.

The content of the dispersant in the interlayer film is preferably 0.001 mass% or more and 0.1 mass% or less, more preferably 0.002 mass% or more and 0.08 mass% or less, even more preferably 0.005 mass% or more and 0.05 mass% or less. When the content of the dispersant in the interlayer film is 0.001 mass% or more, a colorant can appropriately be dispersed by the dispersant. When the interlayer film contains a dispersant, a pummel value is likely to decrease when its water content increases. However, when the content of the dispersant is 0.1 mass% or less, a decrease in pummel value can appropriately be prevented even when the water content increases.

The ratio of the content of a dispersant to the content of a colorant (dispersant content/colorant content) is preferably 0.01 or more and 1.0 or less. When the ratio of the content of a dispersant to the content of a colorant is 0.01 or more and 1.0 or less, the colorant is likely to be appropriately dispersed so that the interlayer film is likely to have a low haze value. Further, the pummel value at a water content of 0.4% or 1.5% is likely to be adjusted to fall within a desired range. From such a viewpoint, the ratio of the content of a dispersant to the content of a colorant is more preferably 0.1 or more and 0.9 or less, even more preferably 0.2 or more and 0.8 or less, still even more preferably 0.3 or more and 0.65 or less.

### [Thermoplastic resin]

The interlayer film of the present invention contains a resin. Particularly, a thermoplastic resin is preferably contained. Since containing a thermoplastic resin, the interlayer film is likely to serve as an adhesive layer and has excellent adhesiveness to a laminated glass member.

Examples of the thermoplastic resin include, but are not limited to, a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. The use of such resins makes it easy to achieve adhesiveness to a laminated glass member.

The interlayer film of the present invention may use one thermoplastic resin singly or two or more thermoplastic resins in combination. It should be noted that when two or more thermoplastic resins are used in combination, one resin layer in the interlayer film may contain two or more thermoplastic resins, or different resin layers in the interlayer film may respectively contain different thermoplastic resins.

Among them, at least one selected from the group consisting of a polyvinyl acetal resin and an ethylene-vinyl acetate copolymer resin is preferred. Particularly, a polyvinyl acetal resin is more preferred from the viewpoint that it exhibits excellent adhesiveness to glass used in combination with a plasticizer. Therefore, the resin contained in the above-described resin layers is also preferably at least one selected from the group consisting of a polyvinyl acetal resin and an ethylene-vinyl acetate copolymer resin, more preferably a polyvinyl acetal resin.

### (Polyvinyl acetal resin)

The polyvinyl acetal resin is not limited as long as it is a polyvinyl acetal resin obtained by acetalizing polyvinyl alcohol (PVA) with an aldehyde.

The aldehyde is not limited, but generally, an aldehyde having 1 to 10 carbon atoms is suitably used. Examples of the aldehyde having 1 to 10 carbon atoms include, but are not limited to, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde.

These aldehydes may be used singly or in combination of two or more of them.

Among them, n-butyraldehyde, n-hexylaldehyde, and n-valeraldehyde are preferred, and n-butyraldehyde is more preferred. Therefore, a polyvinyl butyral resin is suitable as the polyvinyl acetal resin.

Polyvinyl alcohol (PVA) is obtained by, for example, saponifying a polyvinyl ester such as polyvinyl acetate. The degree of saponification of polyvinyl alcohol is generally 70 to 99.9 mol%. As the polyvinyl acetal resin, one polyvinyl acetal resin may be used singly or two or more polyvinyl acetal resins may be used in combination.

The average degree of polymerization of PVA is preferably 200 or more, more preferably 500 or more, even more preferably 1000 or more, still even more preferably 1500 or more. When the average degree of polymerization is equal to or more than the above lower limit, the penetration resistance of a laminated glass increases. Further, the average degree of polymerization of PVA is preferably 5000 or less, more preferably 4000 or less, even more preferably 3500 or less, still even more preferably 2500 or less.

It should be noted that the average degree of polymerization of polyvinyl alcohol is determined by a method complying with JIS K6726 "Testing methods for polyvinyl alcohol".

The amount of hydroxyl groups in the polyvinyl acetal resin is preferably 15 mol% or more and 38 mol% or less. When the amount of hydroxyl groups is 15 mol% or more, excellent adhesiveness is likely to be achieved, and a laminated glass is likely to have excellent penetration resistance, etc. When the amount of hydroxyl groups is 38 mol% or less, a laminated glass is prevented from becoming excessively rigid. From the viewpoint of adhesiveness to a glass plate, the amount of hydroxyl groups is more preferably 20 mol% or more, even more preferably 25 mol% or more. Further, the amount of hydroxyl groups is more preferably 35 mol% or less, even more preferably 33 mol% or less.

When a polyvinyl butyral resin is used as the polyvinyl acetal resin, from the same viewpoint, the amount of hydroxyl groups is preferably 15 mol% or more and 38 mol% or less, more preferably 20 mol% or more, even more preferably 25 mol% or more, more preferably 35 mol% or less and even more preferably 33 mol% or less.

The amount of hydroxyl groups in the polyvinyl acetal resin is a value that expresses, in percentage terms, a mole fraction determined by dividing the amount of ethylene groups to which a hydroxyl group is bonded by the total amount of ethylene groups in the main chain. The amount of ethylene groups to which a hydroxyl group is bonded can be measured in accordance with, for example, JIS K6728 "Testing methods for polyvinyl butyral".

The degree of acetalization of the polyvinyl acetal resin is preferably 47 mol% or more and 85 mol% or less. The degree of acetalization is more preferably 55 mol% or more, even more preferably 60 mol% or more and is more preferably 80 mol% or less, even more preferably 75 mol% or less.

It should be noted that when the acetal group is a butyral group, that is, when the polyvinyl acetal resin is a polyvinyl butyral resin, the degree of acetalization means the degree of butyralization.

The degree of acetalization is a value that expresses, in percentage terms, a mole fraction determined by dividing, by the total amount of ethylene groups in the main chain, a value determined by subtracting the amount of ethylene groups to which a hydroxyl group is bonded and the amount of ethylene groups to which an acetyl group is bonded from the total amount of ethylene groups in the main chain. The degree of acetalization (degree of butyralization) may be calculated from a result measured by a method complying with, for example, JIS K6728 "Testing methods for polyvinyl butyral".

The degree of acetylation of the polyvinyl acetal resin is preferably 30 mol% or less, more preferably 20 mol% or less, even more preferably 10 mol% or less, still even more preferably 2 mol% or less. When the degree of acetylation is equal to or less than the above upper limit, the interlayer film and a laminated glass have high moisture resistance. The degree of acetylation is not limited, but is preferably 0.01 mol% or more, more preferably 0.1 mol% or more.

The degree of acetylation is a value that expresses, in percentage terms, a mole fraction determined by dividing the amount of ethylene groups to which an acetyl group is bonded by the total amount of ethylene groups in the main chain. The amount of ethylene groups to which an acetyl group is bonded can be measured in accordance with, for example, JIS K6728 "Testing methods for polyvinyl butyral".

### (Ethylene-vinyl acetate copolymer resin)

The ethylene-vinyl acetate copolymer resin may be a non-cross-linked ethylene-vinyl acetate copolymer resin or a high-temperature cross-linked ethylene-vinyl acetate copolymer resin. Further, the ethylene-vinyl acetate copolymer resin may be an ethylene-vinyl acetate modified resin such as a saponified ethylene-vinyl acetate copolymer or a hydrolysate of ethylene-vinyl acetate.

The vinyl acetate content of the ethylene-vinyl acetate copolymer resin as measured in accordance with JIS K 6730 "Testing methods for ethylene/vinyl acetate copolymer materials" or JIS K 6924-2: 1997 is preferably 10 to 50 mass%, more preferably 20 to 40 mass%. When the vinyl acetate content is equal to or more than the above lower limit, adhesiveness to glass is enhanced, and a laminated glass is likely to have excellent penetration resistance. Further, when the vinyl acetate content is equal to or less than the above upper limit, the interlayer film has high rupture strength so that a laminated glass has excellent impact resistance.

### (Ionomer resin)

The ionomer resin is not limited, and various ionomer resins may be used. Specific examples of the ionomer resin include an ethylene-based ionomer, a styrene-based ionomer, a perfluorocarbon-based ionomer, a telechelic ionomer, and a polyurethane ionomer. Among them, an ethylene-based ionomer is preferred from the viewpoint of enhancing the mechanical strength, durability, and transparency of a laminated glass and the viewpoint of excellent adhesiveness to glass.

As the ethylene-based ionomer, an ionomer of an ethylene-unsaturated carboxylic acid copolymer is suitably used for its excellent transparency and toughness. The ethylene-unsaturated carboxylic acid copolymer is a copolymer having at least a structural unit derived from ethylene and a structural unit derived from an unsaturated carboxylic acid, and may have a structural unit derived from another monomer.

Examples of the unsaturated carboxylic acid include acrylic acid, methacrylic acid, and maleic acid, and acrylic acid and methacrylic acid are preferred and methacrylic acid is particularly preferred. Examples of the another monomer include an acrylic acid ester, a methacrylic acid ester, and 1-butene.

The ethylene-unsaturated carboxylic acid copolymer preferably has 75 to 99 mol% of an ethylene-derived structural unit and 1 to 25 mol% of an unsaturated carboxylic acid - derived structural unit when the total amount of structural units that the copolymer has is taken as 100 mol%.

The ionomer of an ethylene-unsaturated carboxylic acid copolymer is an ionomer resin obtained by neutralizing or cross-linking, with a metallic ion, at least some of carboxyl groups that the ethylene-unsaturated carboxylic acid copolymer has, and the degree of neutralization of the carboxyl groups is usually 1 to 90%, preferably 5 to 85%.

Examples of an ion source in the ionomer resin include alkali metals such as lithium, sodium, potassium, rubidium, and cesium and polyvalent metals such as magnesium, calcium, and zinc, and sodium and zinc are preferred.

A method for producing the ionomer resin is not limited, and the ionomer resin can be produced by a conventionally-known production method. For example, when an ionomer of an ethylene-unsaturated carboxylic acid copolymer is used as the ionomer resin, an ethylene-unsaturated carboxylic acid copolymer is produced by, for example, radical copolymerization between ethylene and an unsaturated carboxylic acid under high temperature and pressure. Then, the ethylene-unsaturated carboxylic acid copolymer is reacted with a metal compound containing the above-described ion source. In this way, an ionomer of an ethylene-unsaturated carboxylic acid copolymer can be produced.

### (Polyurethane resin)

Examples of the polyurethane resin include a polyurethane obtained by reacting an isocyanate compound and a diol compound and a polyurethane obtained by reacting an isocyanate compound, a diol compound, and a chain extender such as a polyamine. The polyurethane resin may contain a sulfur atom. In this case, part or all of the diol may be selected from the group consisting of a polythiol and a sulfur-containing polyol. The polyurethane resin can enhance adhesiveness to organic glass. Therefore, the polyurethane resin is suitably used when a glass plate is made of organic glass.

### (Thermoplastic elastomer)

Examples of the thermoplastic elastomer include a styrene-based thermoplastic elastomer and an aliphatic polyolefin. The styrene-based thermoplastic elastomer is not limited, and a publicly-known one can be used. The styrene-based thermoplastic elastomer generally has a styrene-monomer polymer block as a hard segment and a conjugated diene compound polymer block or a hydrogenated block thereof as a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadienestyrene triblock copolymer, and hydrogenated products thereof.

The aliphatic polyolefin may be a saturated aliphatic polyolefin or an unsaturated aliphatic polyolefin. The aliphatic polyolefin may be a polyolefin having a linear olefin as a monomer or a polyolefin having a cyclic olefin as a monomer. From the viewpoint of effectively enhancing the storage stability and sound insulation performance of the interlayer film, the aliphatic polyolefin is preferably a saturated aliphatic polyolefin.

Examples of a material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinyl cyclohexane.

The interlayer film may have a single-layer structure constituted from a single resin layer or a multi-layer structure including a plurality of resin layers, but preferably has a single-layer structure. Each resin layer constituting the interlayer film may be formed of a resin composition containing the above-described resin. Further, the resin composition for forming each resin layer may appropriately contain a plasticizer, a dispersant, a colorant, a metallic salt (X), and other additives optionally added to the resin.

When the interlayer film has a multi-layer structure constituted from a plurality of resin layers, the multi-layer structure may be a two-layered structure having two resin layers stacked in its thickness direction, a three-layered structure having three resin layers stacked in its thickness direction, or a structure having four or more resin layers stacked in its thickness direction. Among them, the interlayer film preferably has a two- to five-layered structure and more preferably has a three-layered structure.

As described above, the interlayer film has one or more resin layers, and each of the resin layers may contain a colorant. When the interlayer film has a multi-layer structure, the content of a colorant in each of the resin layers may be adjusted in such a manner that the colorant content and the ratio (dispersant/colorant) of the entire interlayer film fall within their respective ranges described above. However, the colorant content and the ratio (dispersant/colorant) of each of the resin layers containing a colorant may respectively fall within the above-described preferred range of the content of a colorant and the above-described preferred range of the ratio (dispersant/colorant).

When the interlayer film has two or more resin layers, all the resin layers do not necessarily need to contain a colorant, and some of the resin layers may contain a colorant. For example, a resin layer containing a dispersant preferably contains a colorant, especially a pigment. When a resin layer contains a colorant, especially a pigment in addition to a dispersant, the colorant is likely to be appropriately dispersed in the resin layer by the action of the dispersant.

As described above, the interlayer film has one or more resin layers, and each of the resin layers preferably contains a dispersant. When the interlayer film has a multi-layer structure, the content of a dispersant in each of the resin layers may be adjusted in such a manner that the dispersant content of the entire interlayer film falls within the above-described range. However, the dispersant content of each of the resin layers containing a dispersant may fall within the above-described preferred range of the content of a dispersant.

However, when the interlayer film has a multi-layer structure, a resin layer constituting at least one of surface layers of the interlayer film may contain a dispersant, and resin layers constituting both the surface layers preferably contain a dispersant.

In a case where the interlayer film has a multi-layer structure, when a resin layer constituting a surface layer contains a dispersant, a pummel value at a water content of 0.4% of 1 or more and 7 or less and a pummel value at a water content of 1.5% of 3 or more and 9 or less are likely to be achieved by the above-described action of the dispersant.

When the interlayer film has a single-layer structure, both surfaces of a single resin layer constitute both surfaces of the interlayer film and serve as surfaces to be bonded to laminated glass members. When the interlayer film has two or more resin layers, a surface layer constituting each of the surfaces of the interlayer film serves as a surface to be bonded to a laminated glass member that will be described later. When having a two-layered structure, the interlayer film may be constituted from two surface layers.

When having a multi-layer structure, it is preferable that the interlayer film further has a middle layer between surface layers. When having a three-layered structure, the interlayer film may have two surface layers and one middle layer provided between the two surface layers, and when having a four-layered structure, the interlayer film may have two surface layers and two middle layers provided between the two surface layers. When having a multi-layer structure including five or more layers, the interlayer film may have two surface layers and three or more middle layers provided between the two surface layers.

The interlayer film may have an area having a single-layer structure and an area having a multi-layer structure, and when having a multi-layer structure, the interlayer film may have areas different in the number of layers from each other.

The resin constituting each resin layer in the interlayer film is preferably a thermoplastic resin and may appropriately be selected from among the resins mentioned above. The resins constituting respective resin layers may be different from each other but are preferably the same. Therefore, when the interlayer film has a plurality of resin layers, all the resin layers are preferably constituted from a polyvinyl acetal resin or an ethylene-vinyl acetate copolymer resin and are more preferably constituted from a polyvinyl acetal resin.

### [Plasticizer]

When containing a thermoplastic resin, the interlayer film may further contain a plasticizer. When containing a plasticizer, the interlayer film becomes more flexible, which as a result enhances the flexibility and penetration resistance of a laminated glass. Further, the interlayer film becomes possible to exhibit high adhesiveness to a glass plate. Addition of a plasticizer is particularly effective when a polyvinyl acetal resin is used as the thermoplastic resin. Therefore, each of the resin layers more preferably contains a polyvinyl acetal resin and a plasticizer.

Examples of the plasticizer include organic ester plasticizers such as a monobasic organic acid ester and a polybasic organic acid ester and phosphorus plasticizers such as an organic phosphate plasticizer and an organic phosphite plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphoric acid ester and an adipic acid ester, and a mixed-type adipic acid ester. Examples of the mixed-type adipic acid ester include adipic acid esters produced from two or more alcohols selected from the group consisting of alkyl alcohols having 4 to 9 carbon atoms and cyclic alcohols having 4 to 9 carbon atoms.

Among the above plasticizers, triethylene glycol-di-2-ethylhexanoate (3GO) is particularly suitably used.

The content of the plasticizer in the interlayer film is not limited, but is preferably 10 parts by mass or more and 100 parts by mass or less per 100 parts by mass of the thermoplastic resin. When the content of the plasticizer is 10 parts by mass or more, a laminated glass has appropriate flexibility and therefore has excellent penetration resistance etc. Further, when the content of the plasticizer is 100 parts by mass or less, separation of the plasticizer from the interlayer film is prevented. The content of the plasticizer is more preferably 20 parts by mass or more, even more preferably 30 parts by mass or more, still even more preferably 35 parts by mass or more and is more preferably 70 parts by mass or less, even more preferably 63 parts by mass or less.

As described above, the interlayer film has one or more resin layers, and each resin layer containing a thermoplastic resin may further contain a plasticizer. A preferred plasticizer content of each resin layer containing a plasticizer is the same as the above-described preferred plasticizer content.

The interlayer film contains, as its main component, a resin or a resin and a plasticizer. The total amount of a thermoplastic resin and a plasticizer contained in the interlayer film is usually 70 mass% or more, preferably 80 mass% or more, even more preferably 90 mass% or more and less than 100 mass% relative to the total amount of the interlayer film. When the total amount is less than 100 mass%, the interlayer film can contain an additive such as a colorant or a dispersant.

It should be noted that when a plurality of resin layers are provided, each of the resin layers also contains, as its main component, a resin or a resin and a plasticizer, and the total amount of a thermoplastic resin and a plasticizer contained in each of the resin layers is usually 70 mass% or more, preferably 80 mass% or more, more preferably 90 mass% or more and less than 100 mass% relative to the total amount of each of the resin layers.

### [Metallic salt (X)]

The interlayer film preferably contains at least one metallic salt (hereinafter sometimes referred to as "metallic salt (X)") selected from the group consisting of an alkali metal salt, an alkaline-earth metal salt, and a magnesium salt. The metallic salt (X) is generally used as an adhesive force adjuster. When the interlayer film contains a metallic salt (X), adhesive force between the interlayer film and a laminated glass member is controlled so that a pummel value is likely to be adjusted to fall within the above-described desired range. This makes it easy to obtain a laminated glass that has excellent penetration resistance and is less likely to cause separation between the interlayer film and the laminated glass member.

The metallic salt (X) preferably contains at least one metal selected from among K (potassium) and Mg (magnesium). The metallic salt (X) is more preferably an alkali metal salt of an organic acid having 2 to 16 carbon atoms or an alkaline-earth metal salt of an organic acid having 2 to 16 carbon atoms, even more preferably a magnesium salt of a carboxylic acid having 2 to 16 carbon atoms or a potassium salt of a carboxylic acid having 2 to 16 carbon atoms. The magnesium salt of a carboxylic acid having 2 to 16 carbon atoms and the potassium salt of a carboxylic acid having 2 to 16 carbon atoms are not limited, and examples thereof include magnesium acetate, potassium acetate, magnesium propionate, potassium propionate, magnesium 2-ethylbutyrate, potassium 2-ethylbutyrate, magnesium 2-ethylhexanoate, and potassium 2-ethylhexanoate. As the metallic salt (X), one metallic salt (X) may be used singly or two or more metallic salts (X) may be used in combination. When two or more metallic salts (X) are used in combination, magnesium acetate and magnesium 2-ethylbutyrate are preferably used in combination.

The content of the metallic salt (X) in the interlayer film is preferably 5 ppm by mass or more and 1000 ppm by mass or less, more preferably 10 ppm by mass or more and 500 ppm by mass or less, even more preferably 20 ppm by mass or more and 200 ppm by mass or less, particularly preferably 20 ppm by mass or more and 100 ppm by mass or less in terms of the amount of a metallic element derived from the metallic salt. When the content of the metallic salt (X) is within the above range, adhesive force to a laminated glass member can appropriately be adjusted without deteriorating weatherability etc.

As described above, the interlayer film has one or more resin layers, and each of the resin layers may contain a metallic salt (X). When the interlayer film has a multi-layer structure, the content of a metallic salt (X) in each of the resin layers may be adjusted in such a manner that the metallic salt (X) content of the entire interlayer film falls within the above-described range. However, the metallic salt (X) content of each of the resin layers containing a metallic salt (X) may fall within the above-described preferred range of the content of a metallic salt (X).

When the interlayer film has two or more resin layers, a resin layer constituting at least one of surface layers of the interlayer film may contain a metallic salt (X), and resin layers constituting both the surface layers preferably contain a metallic salt (X).

In a case where the interlayer film has multiple layers, when a resin layer constituting the surface layer of the interlayer film contains a metallic salt (X), especially when resin layers constituting both the surface layers of the interlayer film contain a metallic salt (X), adhesive force between the interlayer film and a laminated glass member is controlled so that a pummel value is likely to be adjusted to fall within the above-described desired range.

Therefore, each of the surface layers of the interlayer film having a multi-layer structure preferably contains a dispersant as described above, and more preferably contains either a colorant or a metallic salt (X) in addition to a dispersant, and even more preferably contains a colorant and a metallic salt (X) in addition to a dispersant.

If necessary, the interlayer film may also contain additives (other additives) in addition to those described above, such as a heat shielding agent, an ultraviolet absorber, an antioxidant, a light stabilizer, a fluorescent whitening agent, and a crystal nucleating agent.

When the interlayer film includes two or more resin layers, each of the resin layers may contain other additives, if necessary.

### [Thickness of interlayer film]

The thickness of the interlayer film is preferably 0.2 mm or more and 2.0 mm or less. When having a thickness of 0.2 mm or more, the interlayer film is likely to have excellent adhesiveness to a laminated glass member. Further, when the interlayer film has a thickness of 2.0 mm or less, it is possible to prevent a laminated glass from becoming unnecessarily thick. The thickness of the interlayer film is more preferably 0.25 mm or more and 1.0 mm or less, even more preferably 0.3 mm or more and 0.9 mm or less.

When the interlayer film has a multi-layer structure, the thickness of each resin layer may appropriately be adjusted. For example, the thickness of each surface layer of the interlayer film is preferably 0.05 mm or more and 1 mm or less, more preferably 0.1 mm or more and 0.5 mm or less, even more preferably 0.15 mm or more and 0.45 mm or less. It should be noted that the thickness of the interlayer film or each resin layer may be determined by, for example, 10-point averaging.

### [Visible light transmittance of interlayer film]

The visible light transmittance of the interlayer film is preferably 1% or more, more preferably 2% or more, even more preferably 10% or more, and is preferably 90% or less, more preferably 80% or less, even more preferably 70% or less, still even more preferably 60% or less, particularly preferably 50% or less. It should be noted that the visible light transmittance of the interlayer film is measured using a laminated glass produced by bonding two clear glass plates with the interlayer film being interposed between them. Specifically, the visible light transmittance of the interlayer film is measured using a laminated glass produced by a method that will be described later in Examples.

### [Haze value of interlayer film]

The haze value of the interlayer film is preferably 0.1% or more, more preferably 0.3% or more, even more preferably 0.7% or more, and is preferably 6% or less, more preferably 4% or less, even more preferably 3% or less. It should be noted that the haze value of the interlayer film is measured using a laminated glass produced by bonding two clear glass plates with the interlayer film being interposed between them. Specifically, the haze value of the interlayer film is measured by a method that will be described later in Examples.

### [(Haze value/colorant content) of interlayer film]

A value determined by dividing the haze value of the interlayer film by the colorant content of the interlayer film is, for example, 5 or more, preferably 10 or more, more preferably 20 or more, and is preferably less than 95, more preferably less than 70, even more preferably less than 60.

### (Method for producing interlayer film)

Although not limited, when having a single-layer structure, the interlayer film of the present invention may be produced by, for example, mixing components constituting the interlayer film, such as a resin, a colorant, and optional additives such as a dispersant, a plasticizer, a metallic salt (X), and other additives, and subjecting the thus obtained resin composition to molding such as extrusion molding or press molding.

Here, from the viewpoint of enhancing the dispersibility of the colorant in the resin composition, the colorant is preferably mixed with the resin as a dispersion liquid containing the colorant and a dispersant, and is more preferably mixed with the resin as a dispersion liquid obtained by adding the colorant to a plasticizer and adding a dispersant thereto so that the colorant is dispersed in the plasticizer by the dispersant. When the colorant is sufficiently dispersed in the plasticizer by the dispersant before added to the resin composition, it is possible to appropriately disperse the colorant also in the interlayer film while preventing its aggregation in the interlayer film.

A method for dispersing a colorant in a plasticizer is not limited, but may be a method in which a colorant is added to a plasticizer together with a dispersant and dispersed using a dispersing device such as a bead mill, a sand mill, a roll mill, a ball mill, a jet mill, a paint shaker, a microfluidizer, a high-speed impeller, a sand grinder, a flow jet mixer, a highpressure wet micronization device, or an ultrasonic dispersing device.

When two or more colorants are used, a dispersion liquid may be prepared for each of the colorants or a dispersion liquid containing two or more colorants may be prepared.

The ratio between a colorant and a dispersant of each of the dispersion liquids is also preferably adjusted to fall within the above-described range of the ratio (dispersant content/colorant content).

Also when having a multi-layer structure, the interlayer film may be obtained by molding such as extrusion molding or press molding as in the case of a single-layer structure. When having a multi-layer structure, the interlayer film may be obtained by preparing resin compositions for forming respective resin layers as in the case of a single-layer structure, forming respective resin layers from the resin compositions, and stacking the resin layers.

Also in the case of a multi-layer structure, extrusion molding is preferred. Particularly, coextrusion is more preferred. In the case of coextrusion, resin compositions for forming respective resin layers may be coextruded to obtain an interlayer film having a multi-layer structure.

### <Laminated glass>

The present invention further provides a laminated glass. The laminated glass of the present invention includes a first laminated glass member, a second laminated glass member, and the interlayer film for laminated glass of the present invention interposed between the first laminated glass member and the second laminated glass member. The first laminated glass member and the second laminated glass member are bonded together with the interlayer film being interposed between them. One of the surfaces of the interlayer film is bonded to the first laminated glass member and the other surface of the interlayer film is bonded to the second laminated glass member.

The laminated glass may be produced by integrating the first laminated glass member, the second laminated glass member, and the above-described interlayer film interposed between them through compression bonding or the like.

### (First and second laminated glass members)

As the first and second laminated glass members used in the laminated glass, glass plates are used. The glass plates may be made of either inorganic glass or organic glass, but inorganic glass is preferred. Examples of the inorganic glass include, but are not limited to, clear glass, float plate glass, polished plate glass, figured glass, wire-net reinforced plate glass, wire reinforced plate glass, and green glass.

As the organic glass, one called resin glass is generally used, and examples of the organic glass include, but are not limited to, organic glasses made of resins such as polycarbonate, acrylic resins, acrylic copolymer resins, and polyesters.

The first and second laminated glass members may be made of the same material or different materials. For example, the first laminated glass member may be made of inorganic glass and the second laminated glass member may be made of organic glass. However, both the first and second glass members are preferably made of inorganic glass or organic glass.

The thickness of the first and second laminated glass members is not limited, but is, for example, about 0.1 to 15 mm, preferably 0.5 to 5 mm. The thicknesses of the first and second laminated glass members may be the same or different from each other, but are preferably the same.

The laminated glass of the present invention can be used as a window glass for various vehicles such as cars, airplanes, ships, and buildings, but is preferably used as a laminated glass for cars. The laminated glass for cars may be any one of a wind-shield glass (front glass), a side glass, a rear glass, and a roof glass.

### Examples

The present invention will be described in more detail with reference to examples, but the present invention is not at all limited by these examples.

Measurement methods and evaluation methods used in the examples are as follows.

### [Molecular weight of dispersant]

The weight-average molecular weight of a dispersant was measured by gel permeation chromatography (GPC) (device: "APC system" manufactured by Waters, column: "ACQIUTY APC XT125-X145-XT45, 4.6 mmΦ × 150 mm each") manufactured by Waters). Further, THF was used as an eluant, RI was used as a detector, and polystyrene was used as a reference standard.

### [Thicknesses of interlayer film]

The thickness of an interlayer film was measured with a micrometer ("OMV-50MX" manufactured by Mitutoyo Corporation) or a microscope ("DSX500" manufactured by Olympus Corporation).

### [Visible light transmittance]

The visible light transmittances of an obtained laminated glass at wavelengths ranging from 380 to 780 nm were measured with a spectrophotometer ("U-4100" manufactured by Hitachi High-Tech Corporation) in accordance with JIS R3211 (1988). It should be noted that the visible light transmittance of an interlayer film was measured using a laminated glass produced by bonding two clear glass plates with the interlayer film being interposed between them by a method that will be described later in Examples. The clear glass plates used for measuring the visible light transmittance of an interlayer film are clear glass plates (visible light transmittance: 90.4%, manufactured by Central Glass Co., Ltd.) complying with JIS R3202 (2011).

### [Pummel value]

The water contents of interlayer films obtained in Examples and Comparative Examples were adjusted to 0.4% and 1.5%. It should be noted that the interlayer films used to measure a pummel value were confirmed to have the above water content by determining a 2-point average of water contents measured in portions corresponding to central portions of a laminated glass described later by Method B -moisture vaporization method in accordance with JIS K 7251. As will be described later in Examples, laminated glasses were produced using the interlayer films whose water contents were respectively adjusted to 0.4% and 1.5%.

Each of the obtained laminated glasses was left to stand at a temperature of -18°C ± 0.6°C for 16 hours, and one-half (a portion of 150 mm long × 150 mm wide) of the laminated glass was hit with a hammer with a head weight of 0.45 kg until crushed into glass fragments with a particle diameter of 6 mm or less. Then, the glass fragments separated from the interlayer film were removed, and the degree of exposure of the interlayer film caused by separation of the glass fragments from the interlayer film was measured to determine a pummel value in accordance with Table 1 shown below. The average of four measured values obtained by measuring the front and back surfaces of two laminated glass samples was used as a pummel value.

Further, a value calculated by subtracting the pummel value at a water content of 0.4% from the pummel value at a water content of 1.5% was evaluated according to the following criteria.
A .. 3 or more
B .. 0 or more and less than 3
C .. less than 0

**[Table 1]**

| Degree of exposure of interlayer film (area%) | Pummel value |
|---|---|
| 95 < Degree of exposure ≤ 100 | 1 |
| 90 < Degree of exposure ≤ 95 | 1.5 |
| 85 < Degree of exposure ≤ 90 | 2 |
| 70 < Degree of exposure ≤ 85 | 2.5 |
| 60 < Degree of exposure ≤ 70 | 3 |
| 50 < Degree of exposure ≤ 60 | 3.5 |
| 40 < Degree of exposure ≤ 50 | 4 |
| 30 < Degree of exposure ≤ 40 | 4.5 |
| 20 < Degree of exposure ≤ 30 | 5 |
| 15 < Degree of exposure ≤ 20 | 5.5 |
| 10 < Degree of exposure ≤ 15 | 6 |
| 7.5 < Degree of exposure ≤ 10 | 6.5 |
| 5 < Degree of exposure ≤ 7.5 | 7 |
| 3.5 < Degree of exposure ≤ 5 | 7.5 |
| 2 < Degree of exposure ≤ 3.5 | 8 |
| 1 < Degree of exposure ≤ 2 | 8.5 |
| 0 ≤ Degree of exposure ≤ 1 | 9 |

### [Haze value]

The haze value of an interlayer film was measured using a haze transmittance meter (" HM-150" manufactured by MURAKAMI COLOR RESEARCH LABORATORY) in accordance with a measurement method specified in JIS K 7105-1981. It should be noted that the haze value of an interlayer film was measured using a laminated glass produced by bonding two clear glass plates with the interlayer film interposed between them by a method that will be described later in Examples. The clear glass plates used for measuring the haze value of an interlayer film are clear glass plates (visible light transmittance 90.4%, manufactured by Central Glass Co., Ltd.) complying with JIS R3202 (2011).

A value calculated by dividing the haze value (%) by the content of coloring matter (mass%) was evaluated according to the following criteria.
A .. less than 70
B .. 70 or more and less than 95
C .. 95 or more

It should be noted that components used in Examples and Comparative Examples are as follows.
(1) Resins
   PVB: Polyvinyl butyral resin, degree of acetalization 69 mol%, amount of hydroxyl groups 30 mol%, degree of acetylation 1 mol%, average degree of polymerization of PVA used for synthesis 1700
(2) Plasticizer
   3GO: Triethylene glycol di-2-ethylhexanoate
(3) Pigments
   PR209: Pigment red 209 (CAS No. 3573-01-1), quinacridone-based pigment, red pigment
   PY150: Pigment yellow 150 (CAS No. 68511-62-6), nickel complex azo-based pigment
   PB15-3: Pigment blue 15-3 (CAS No. 147-14-8), copper phthalocyanine-based pigment
   PG7: Pigment green 7 (CAS No. 1328-53-6), copper phthalocyanine-based pigment
   Pbla7: Pigment black 7 (CAS No. 1333-86-4), carbon black pigment
   PB15-1: Pigment blue 15-1 (CAS No. 147-14-8), copper phthalocyanine-based pigment
   PR149: Pigment red 149 (CAS No. 4948-15-6), perylene-based pigment
(4) Dispersant
   a: "DISPERBYK-2009" manufactured by BYK, modified acrylic block copolymer, basic, weight-average molecular weight: 3000
   b: "ANTI-TERRA-204" manufactured by BYK, polyaminoamide polycarboxylic acid salt
   c: "NEWPOL PE61" manufactured by Sanyo Chemical Industries, Ltd., weight-average molecular weight: 2900
(5) Metallic salt (X)
   Mg salt: 50:50 (mass ratio) Mixture of magnesium 2-ethylbutyrate and magnesium acetate

### [Example 1]

### (Production of interlayer film)

A plasticizer, a dispersant, a colorant, and a metallic salt (X) were added to a polyvinyl butyral resin (PVB) in accordance with a formulation shown in Table 2, they were kneaded using an extrusion machine to obtain a resin composition, and the obtained resin composition was extruded to obtain an interlayer film having a thickness of 760 µm.

### (Production of laminated glass)

Two sheets of clear glass were prepared, each of which had a size of 300 mm long × 150 mm wide × 2.5 mm thick. As the clear glass, clear glass (visible light transmittance 90.4%, manufactured by Central Glass Co., Ltd.) complying with JIS R3202 (2011) was used. The interlayer film obtained above was maintained under humidity-controlled conditions of 23°C and 23% RH for 12 hours (in the case of a water content of 0.4%) or 50°C and 95% RH for 20 minutes (in the case of a water content of 1.5%) and was then confirmed to have a water content of 0.4% or 1.5%. Then, the interlayer film was sandwiched between the two sheets of clear glass to obtain a laminate. The obtained laminate was subjected to preliminary compression bonding using a heating roll at 170°C. The laminate subjected to preliminary compression bonding was subjected to compression bonding using an autoclave under conditions of 140°C and a pressure of 1.3 MPa for 20 minutes to produce a laminated glass.

### [Examples 2 to 12 and Comparative Examples 1 to 2]

Each of Examples 2 to 12 and Comparative Examples 1 to 2 was performed in the same manner as in Example 1 except that the formulation of the interlayer film was adjusted as shown in Table 2 or Table 3.

**Table 2**

| | | | | | Example 1 | Example 2 | Example 3 | Example 4 | Example 5 | Example 6 | Example 7 |
|---|---|---|---|---|---|---|---|---|---|---|---|
| | Resin | | Type | - | PVB | PVB | PVB | PVB | PVB | PVB | PVB |
| | | | Content | parts by mass | 100 | 100 | 100 | 100 | 100 | 100 | 100 |
| | Plasticizer | | Type | - | 3GO | 3GO | 3GO | 3GO | 3GO | 3GO | 3GO |
| | | | Content | parts by mass | 40 | 40 | 40 | 40 | 40 | 40 | 40 |
| | | 1 | Type | - | PR209 | PY150 | PR209 | PB15-3 | PR209 | PR209 | PR209 |
| | | | Content | mass% | 0.031 | 0.004 | 0.009 | 0.006 | 0.009 | 0.032 | 0.021 |
| | | 2 | Type | - | - | - | - | PBla7 | PB15-3 | PB15-3 | PB15-3 |
| | Colorant | | Content | mass% | 0.000 | 0.000 | 0.000 | 0.008 | 0.006 | 0.016 | 0.015 |
| | | 3 | Type | - | - | - | - | - | PBla7 | PBla7 | PBla7 |
| | | | Content | mass% | 0.000 | 0.000 | 0.000 | 0.000 | 0.016 | 0.037 | 0.039 |
| | | 4 | Type | - | - | - | - | - | - | - | - |
| | | | Content | mass% | 0.000 | 0.000 | 0.000 | 0.000 | 0.000 | 0.000 | 0.000 |
| Interlayer film | | Total | | mass% | 0.031 | 0.004 | 0.009 | 0.014 | 0.031 | 0.084 | 0.075 |
| | Dispersant | 1 | Type | - | a | a | a | a | a | a | a |
| | | | Content | mass% | 0.025 | 0.002 | 0.007 | 0.008 | 0.020 | 0.030 | 0.025 |
| | | 2 | Type | - | b | - | b | b | b | b | b |
| | | | Content | mass% | 0.005 | 0.000 | 0.001 | 0.001 | 0.003 | 0.004 | 0.003 |
| | | Total | | mass% | 0.030 | 0.002 | 0.008 | 0.009 | 0.023 | 0.034 | 0.028 |
| | Dispersant/Colorant | | | - | 0.97 | 0.47 | 0.89 | 0.64 | 0.74 | 0.40 | 0.37 |
| | Ratio of second dispersant to first dispersant | | | - | 0.20 | 0.00 | 0.14 | 0.10 | 0.14 | 0.13 | 0.12 |
| | Metallic species | | Type | - | Mg | Mg | Mg | Mg | Mg | Mg | Mg |
| | | | Content | ppm | 70 | 45 | 45 | 45 | 45 | 85 | 85 |
| | Thickness | | | µm | 760 | 760 | 760 | 760 | 760 | 760 | 760 |
| | Visible light transmittance Tv | | | % | 62.7 | 88.4 | 78.4 | 34.7 | 17.1 | 1.6 | 1.6 |
| | Haze value | | | % | 0.8 | 0.2 | 0.6 | 0.8 | 1.1 | 5.0 | 4.1 |
| Measured value | Pummel | | (Water content 0.4%) | - | 3.0 | 5.5 | 4.6 | 4.5 | 5.0 | 2.0 | 2.2 |
| | | | (Water content 1.5%) | - | 3.1 | 9.0 | 8.8 | 8.4 | 6.0 | 7.5 | 7.7 |
| Measured value | (Pummel at water content of 1.5%) - (Pummel at water content of 0.4%) | | | | 0.1 | 3.5 | 4.2 | 3.9 | 1.0 | 5.5 | 5.5 |
| Evaluation | | | | | B | A | A | A | B | A | A |
| Measured value | Haze value/Colorant content | | | %/mass% | 24.2 | 51.2 | 61.1 | 58.4 | 36.5 | 59.3 | 54.9 |
| Evaluation | | | | | A | A | A | A | A | A | A |

**Table 3**

| | | | | | Example 8 | Example 9 | Example 10 | Example 11 | Example 12 | Comparative Example 1 | Comparative Example 2 |
|---|---|---|---|---|---|---|---|---|---|---|---|
| | Resin | | Type | - | PVB | PVB | PVB | PVB | PVB | PVB | PVB |
| | | | Content | parts by mass | 100 | 100 | 100 | 100 | 100 | 100 | 100 |
| | Plasticizer | | Type | - | 3GO | 3GO | 3GO | 3GO | 3GO | 3GO | 3GO |
| | | | Content | parts by mass | 40 | 40 | 40 | 40 | 40 | 40 | 40 |
| | | 1 | Type | - | PR209 | PR209 | PR209 | PG7 | PG7 | PR209 | PR209 |
| | | | Content | mass% | 0.072 | 0.072 | 0.072 | 0.001 | 0.003 | 0.032 | 0.021 |
| | | 2 | Type | - | - | - | - | PR149 | PR149 | PB15-3 | PB15-3 |
| | | | Content | mass% | 0.000 | 0.000 | 0.000 | 0.001 | 0.003 | 0.016 | 0.015 |
| | Colorant | 3 | Type | - | - | - | - | PB15-1 | PB15-1 | PBla7 | PBla7 |
| | | | Content | mass% | 0.000 | 0.000 | 0.000 | 0.009 | 0.021 | 0.037 | 0.039 |
| | | 4 | Type | - | - | - | - | PBla7 | PBla7 | - | - |
| | | | Content | mass% | 0.000 | 0.000 | 0.000 | 0.017 | 0.042 | 0.000 | 0.000 |
| Interlayer film | | Total | | mass% | 0.072 | 0.072 | 0.072 | 0.028 | 0.069 | 0.084 | 0.075 |
| | Dispersant | 1 | Type | - | - | a | a | c | c | a | a |
| | | | Content | mass% | 0.000 | 0.057 | 0.057 | 0.001 | 0.001 | 0.057 | 0.050 |
| | | 2 | Type | - | - | b | b | - | - | b | b |
| | | | Content | mass% | 0.000 | 0.011 | 0.011 | 0.000 | 0.000 | 0.008 | 0.007 |
| | | Total | | mass% | 0.000 | 0.068 | 0.068 | 0.001 | 0.001 | 0.066 | 0.057 |
| | Dispersant/Colorant | | | - | 0.00 | 0.95 | 0.95 | 0.03 | 0.02 | 0.78 | 0.76 |
| | Ratio of second dispersant to first dispersant | | | - | - | 0.19 | 0.19 | 0.00 | 0.00 | 0.15 | 0.14 |
| | Metallic species | | Type | - | Mg | Mg | Mg | Mg | Mg | Mg | Mg |
| | | | Content | ppm | 85 | 85 | 60 | 45 | 85 | 85 | 85 |
| | Thickness | | | µm | 760 | 760 | 760 | 760 | 760 | 760 | 760 |
| | Visible light transmittance Tv | | | % | 33.6 | 42.5 | 43.2 | 18.0 | 2.3 | 1.6 | 1.6 |
| | Haze value | | | % | 6.5 | 1.0 | 0.9 | 2.0 | 3.5 | 4.3 | 3.2 |
| Measured value | Pummel | | (Water content 0.4%) | - | 4.8 | 3.5 | 6.5 | 4.6 | 3.0 | 3.3 | 5.0 |
| | | | (Water content 1.5%) | - | 8.0 | 5.4 | 6.5 | 6.4 | 4.0 | 1.3 | 1.5 |
| Measured value | (Pummel at water content of 1.5%) - (Pummel at water content of 0.4%) | | | | 3.3 | 1.9 | 0.0 | 1.8 | 1.0 | -2.0 | -3.5 |
| Evaluation | | | | | A | B | B | B | B | C | C |
| Measured value | Haze value/Colorant content | | | %/mass% | 90.0 | 14.3 | 12.6 | 71.2 | 50.3 | 51.2 | 42.7 |
| Evaluation | | | | | B | B | B | B | A | A | A |

As shown in Table 2 and Table 3, in each of Examples, a pummel value at a water content of 0.4% of 1 or more and 7 or less and a pummel value at a water content of 1.5% of 3 or more and 9 or less were achieved by adjusting the formulation of the interlayer film. As a result, even when the water content of the interlayer film increased, a decrease in the pummel value of the interlayer film could be prevented and therefore separation between the interlayer film and the laminated glass member could be prevented.

On the other hand, in each of Comparative Examples, the pummel value at a water content of 1.5% was less than 3. Therefore, when the water content of the interlayer film increased, the pummel value of the interlayer film significantly decreased, and therefore separation between the interlayer film and the laminated glass member could not be prevented.

## Claims

1. An interlayer film for laminated glass, which comprises a colorant and has a pummel value at a water content of 0.4% of 1 or more and 7 or less and a pummel value at a water content of 1.5% of 3 or more and 9 or less.

2. The interlayer film for laminated glass according to claim 1, wherein a value obtained by subtracting the pummel value at a water content of 0.4% from the pummel value at a water content of 1.5% is 0 or more.

3. The interlayer film for laminated glass according to claim 1, which comprises a thermoplastic resin.

4. The interlayer film for laminated glass according to claim 1, which further comprises a dispersant.

5. The interlayer film for laminated glass according to claim 4, wherein the dispersant comprises at least one selected from the group consisting of an acrylic dispersant, an amine-based dispersant, a urethane-based dispersant, and a carboxylic acid-based dispersant.

6. The interlayer film for laminated glass according to claim 4, wherein the dispersant comprises two or more dispersants.

7. The interlayer film for laminated glass according to claim 6, wherein the dispersant comprises a first dispersant and a second dispersant having a lower molecular weight than the first dispersant, and wherein a mass-based ratio of a content of the second dispersant to a content of the first dispersant is 1/100 or more and 30/100 or less.

8. The interlayer film for laminated glass according to claim 4, wherein the dispersant comprises a dispersant having a molecular weight of 2500 or more.

9. The interlayer film for laminated glass according to claim 4, wherein a content of the dispersant in the interlayer film for laminated glass is 0.001 mass% or more and 0.1 mass% or less.

10. The interlayer film for laminated glass according to claim 4, wherein a ratio of a content of the dispersant to a content of the colorant (dispersant content/colorant content) is 0.01 or more and 1.0 or less.

11. The interlayer film for laminated glass according to claim 1, which comprises at least one metallic salt selected from the group consisting of an alkali metal salt, an alkaline-earth metal salt, and a magnesium salt.

12. A laminated glass comprising:
a first laminated glass member;
a second laminated glass member; and
the interlayer film for laminated glass according to any one of claims 1 to 11 interposed between the first laminated glass member and the second laminated glass member.
